# EUROPEAN PATENT APPLICATION

(11) **EP 4 455 408 A2**
(43) Date of publication of application: **30.10.2024**
(21) Application number: 22911755.1
(22) Date of filing: 14.12.2022
(51) Int. Cl.: E02F 3/36, E02F 3/30, E02F 9/14, E02F 3/413, E02F 3/40, E02F 3/96

(54) **EXCAVATING APPARATUS**

(30) Priority: 24.12.2021 KR 20210187321; 06.04.2022 KR 20220042903
(71) Applicant: Kyungwontech Co., Ltd., Chungcheongbuk-do 27649 (KR); Jeong, Kyeongrae, Chungcheongbuk-do 27649 (KR)
(72) Inventor: JEONG, Kyeongrae, Eumseong-gun, Chungcheongbuk-do 27649 (KR)
(74) Representative: Cabinet Beaumont
(86) International application number: PCT/KR2022/020304
(87) International publication number: WO 2023/121122

(57) **Abstract**

Proposed is an excavating apparatus including a lower arm having a width that is gradually increased from one end to the other end, and a fixing hole formed in the outer peripheral surface at the other end, a rotational arm stand which is located on the other end of the lower arm, is formed in a disc shape, and is rotatably fixed to the lower arm, an upper arm which is fixed to the rotational arm stand, and has a guide hole in the outer peripheral surface thereof, a center joint which is surrounded by the lower arm, the rotational arm stand, and the upper arm, and is exposed to outside via the fixing hole of the lower arm and the guide hole of the upper arm, and a slip ring which is inserted into or separated from the center joint via the guide hole of the upper arm.

## Description

### Technical Field

The present disclosure relates to an excavating apparatus having a bucket, a lower arm, a rotational arm stand, an upper arm, and a boom, which are sequentially arranged toward a cab and rotated with respect to each other at a work site, and having a bucket cylinder and an arm cylinder located around the lower arm and the boom and rotationally coupled to the bucket and the upper arm, respectively.

### Background Art

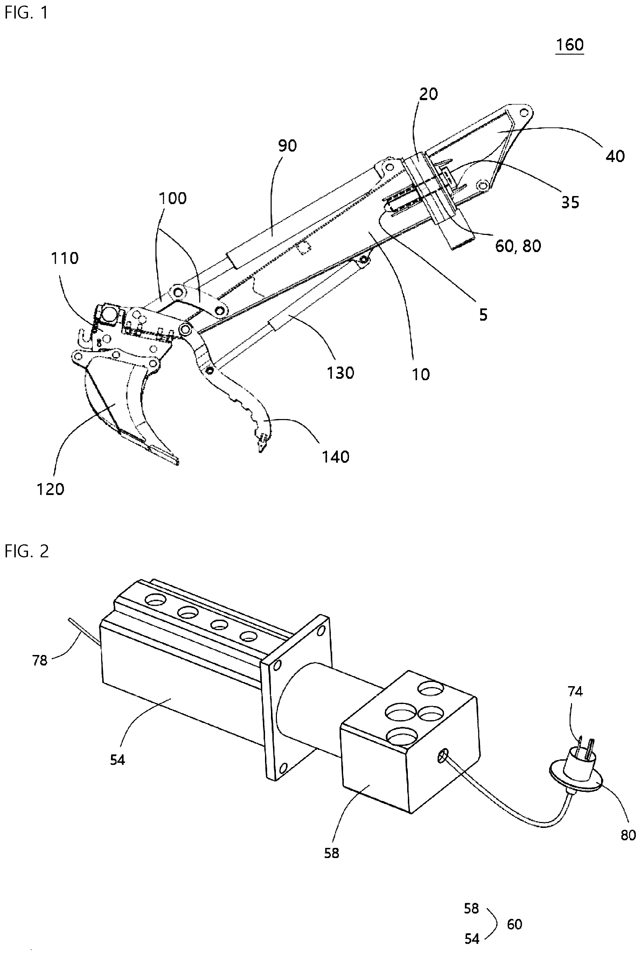

In general, excavators enhance work efficiency while reducing the number of workers required at construction sites, waste collection sites, or demolition sites despite the increase in load and volume of work objects. For this purpose, in the case of a first excavator 160 shown in FIG. 1 that is often used at construction sites, waste collection sites, or demolition sites, a bucket 120 and a clamp 140 are attached to a multi-joint arm 10, 20, and 40, and a clamp 140 and a bucket 120 are engaged during movements of a bucket cylinder 90 and a clamp cylinder 130 around the arms 10, 20, and 40 to transport wood, stones, and concrete waste.

Referring to FIG. 1, the bucket 120 is rotationally fixed to one end of the multi-joint arm 10, 20, and 40 in the first excavator 160, and the other end of the multi-joint arm 10, 20, and 40 is rotationally fixed to a boom (not shown in the drawing) in the first excavator 160. Accordingly, a concave inlet of the bucket 120 opens toward a cab of the first excavator 160 or opens away from the cab of the first excavator 160 during relative rotation of the multi-joint arm 10, 20, and 40 with respect to the boom.

At this time, the multi-joint arm 10, 20, and 40 is composed of a lower rotary arm 10, a rotary driver 20, and an upper rotary arm 40, which are sequentially stacked to form a single pillar shape. The rotary driver 20 rotates the lower rotary arm 10 relative to the upper rotary arm 40. In addition, the first excavator 160 is provided with a link structure 100 and a tilt link 110 between the lower rotary arm 10 and the bucket 120 to connect the bucket 120 to the lower rotary arm 10 by means of the link structure 100 and the tilt link 110.

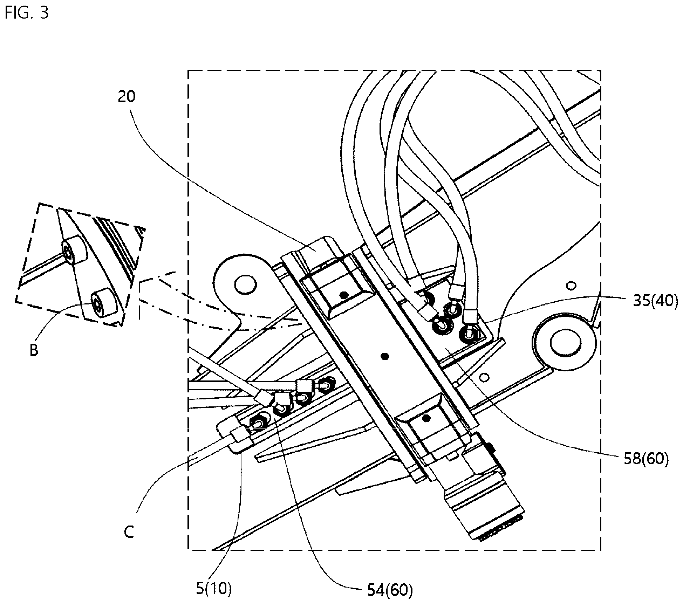

The tilt link 110 is coupled to the bucket 120 together with the link structure 100 to rotate the bucket 120 around the end of the lower rotary arm 10. Due to this, unlike the movement of the link structure 100, the self-rotation of the multi-joint arm and the self-rotation of the tilt link 110 may continuously change the opening direction of the concave inlet of the bucket 120 during the relative rotation of the multi-joint arm 10, 20, and 40 with respect to the boom. Meanwhile, referring to FIGS. 2 and 3, the lower rotary arm 10, the rotary driver 20, and the upper rotary arm 40 surround a center joint 60 and a slip ring 80.

As shown in FIGS. 2 and 3, the center joint 60 has a joint housing 54 and a joint shaft 58. The joint shaft 58 rotates relative to joint housing 54. As shown in FIGS. 1 and 3, the joint housing 54 and the joint shaft 58 are exposed to the outside through a first hole 5 of the lower rotary arm 10 and a second hole 35 of the upper rotary arm 40. As shown in FIG. 2, the slip ring 80 has an input end 74 and an output end 78. The slip ring 80 exposes the input end 74 and the output end 78 to the outside through the first hole 5 of the lower rotary arm 10 and the second hole 35 of the upper rotary arm 40.

The input end 74 receives power from the first excavator 160, and the output end 78 is connected to an electronic device (e.g., a leveling machine, etc., not shown in the drawing) and supplies power from the input end 74 to the electronic device. However, when inserting the output end 78 of the slip ring 80 into the center joint 60, the upper rotary arm 40 and the center joint 60, as shown in FIG. 3, form a structure that makes it difficult to directly introduce the slip ring 80 into the second hole 35 from the outside since the width between the upper rotary arm 40 and the joint shaft 60 in the second hole 35 of the upper rotary arm 40 is smaller than the diameter of one hydraulic line C.

Thus, in case of failure of the electronic device or disconnection of the input end 74 or output end in the slip ring 80, in order to insert a new slip ring 80 into the center joint 60 with the previously used slip ring 80 removed from the center joint 60, disassembly of the lower rotary arm 10 and upper rotary arm 40 from the rotary driver 20 is required. In addition, the assembly and disassembly of the lower rotary arm 10 and the upper rotary arm 40 from the rotary driver 20 is performed by removing a plurality of hydraulic lines C from the center joint 60 and repeatedly changing the state of a plurality of screw members B connecting the lower rotary arm 10 and the rotary driver 20 from the tightened state to the loosened state.

Therefore, inserting the new slip ring 80 into the center joint 60 requires a lot of effort on the part of an excavation worker regarding the dismantling of the multi-joint arm 10, 20, and 40 and the dismantling of the center joint 60 from the hydraulic lines C and delays the work schedule at an excavation site, making the environment at the excavation site poor.

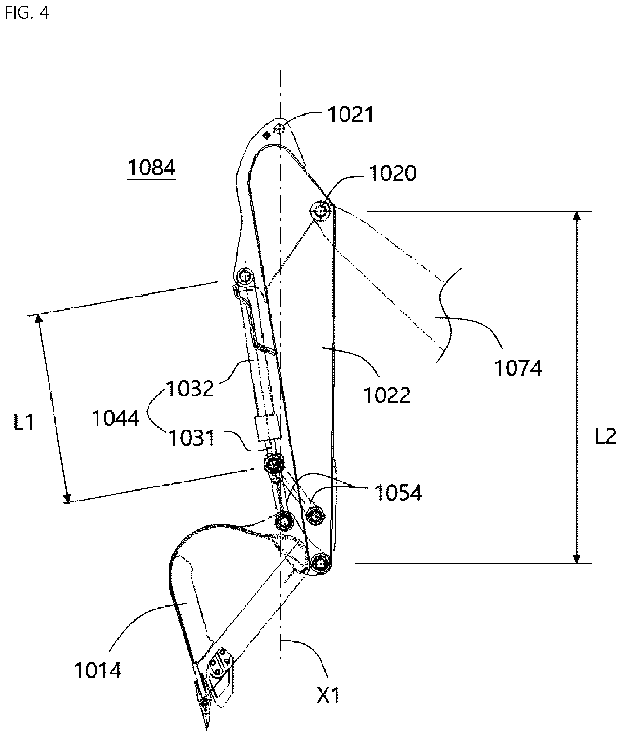

Meanwhile, FIG. 4 shows a second excavator 1084 having a first bucket 1014, a first bucket cylinder 1044, a first multi-joint link 1054, and a first boom 1074 around a first arm 1022. The first bucket 1014 is axially coupled to the end of the first arm 1022 at one edge. The first arm 1022 is axially coupled to the first boom 1074 through a first boom coupling hole part 1020, is axially coupled to a first arm cylinder (not shown in the drawing) through a first arm cylinder coupling hole part 1021, and is axially coupled to the first bucket cylinder 1044.

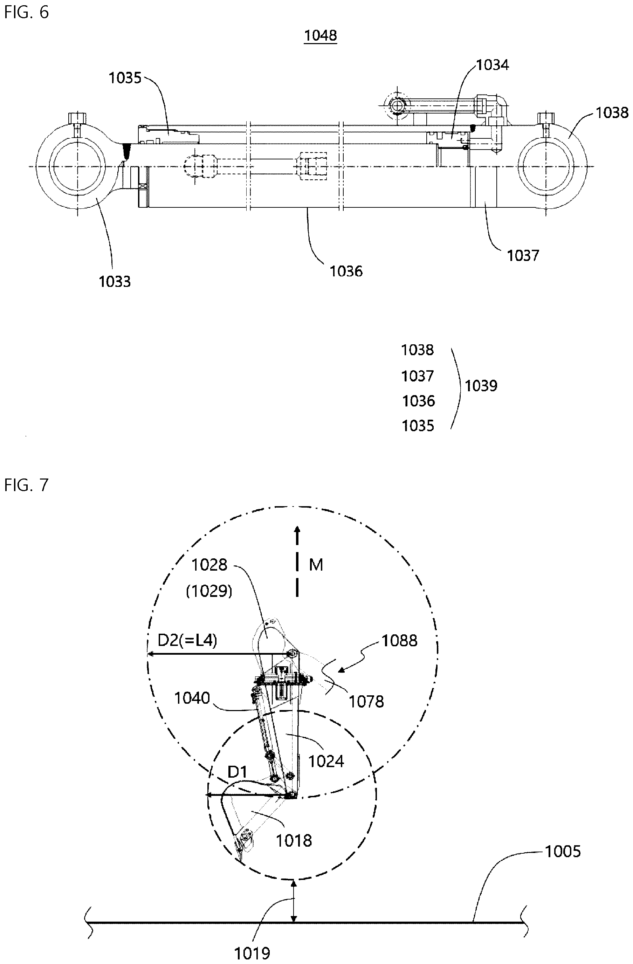

The first bucket cylinder 1044 is provided with a first rod 1031, a first piston (see numeral 1034 in FIG. 6), and a first cylinder 1032. The first cylinder 1032 has a first head cover (see numeral 1037 in FIG. 6) coupled to a first tube (see numeral 1036 in FIG. 6) on the opposite side of a first rod 1031, a first connection ring (see numeral 1038 in FIG. 6), and a first rod cover (see numeral 1035 in FIG. 6) coupled to the first tube near the first rod 1031.

In this case, the first bucket cylinder 1044 is axially coupled to the first arm 1022 by inserting the shaft thereof into the first connection ring. The first multi-joint link 1054 is axially coupled to the first arm 1022 and the first rod 1031 along with the other edge of the first bucket 1014. The first bucket 1014 rotates around the first arm 1022 similarly as in FIG. 7 due to shape deformation of the first multi-joint link 1054 according to the operation of the first bucket cylinder 1044, and the first arm 1022 pivots similarly as in FIG. 7 about the first boom 1074 upon operation of the first arm cylinder.

When the first rod 1031 is minimally exposed from the first rod cover as shown in FIG. 4, the first bucket cylinder 1044 has a first length L1 between the center of the first connection ring and the end of the first rod 1031. The first arm 1022 has a second length L2 between the center of the first boom coupling hole part 1020 and the end of the first arm 1022. Since the first arm 1022 rotates the first bucket 1014 according to the operation of the first bucket cylinder 1044, the first arm 1022 grows in proportion to the length of the first bucket cylinder 1044.

The second excavator 1084 has an end of the first rod 1031 on an extension line X1 that passes vertically through the first arm cylinder coupling hole part 1021 when the first rod 1031 is minimally exposed from the first rod cover as shown in FIG. 4. The second excavator 1084 moves the first bucket 1014 only around the first arm 1022.

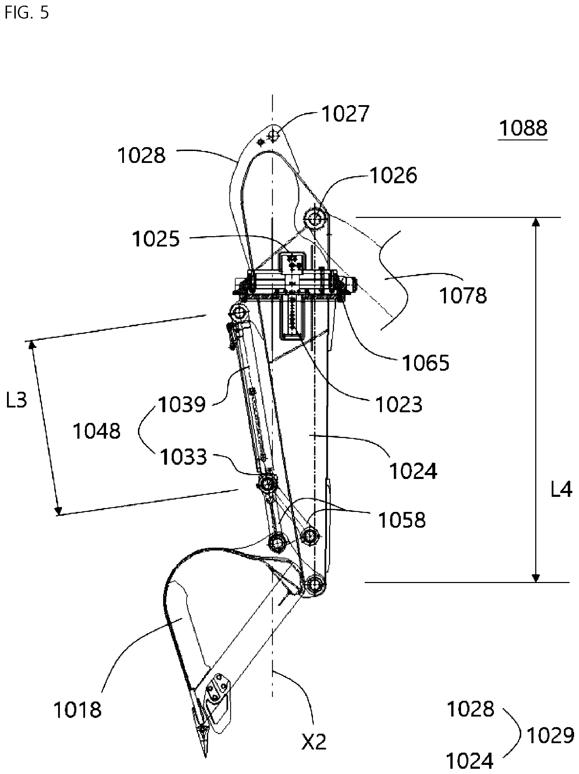

As another example, FIG. 5 shows a third excavator 1088 having a second bucket 1018, a second bucket cylinder 1048, a second multi-joint link 1058, a rotational arm stand 1065, and a second boom 1078 around a second arm 1029. The second bucket 1018, the second arm 1029, the second bucket cylinder 1048, the second multi-joint link 1058, and the second boom 1078 perform similar functions as the first bucket 1014, the first arm 1022, the first bucket cylinder 1044, the first multi-joint link 1054, and the first boom 1074 in FIG. 4.

In order for the third excavator 1088 to have a different function from the second excavator 1084, the second arm 1029 is subdivided into a second lower arm 1024 and a second upper arm 1028, and the rotational arm stand 1065 is positioned between the second lower arm 1024 and the second upper arm 1028 to rotate the second lower arm 1024 relative to the second upper arm 1028. At this time, the second bucket cylinder 1048 maintains the same structure as the first bucket cylinder 1044.

To be specific, as shown in FIG. 6, the second bucket cylinder 1048 has a second rod 1033, a second piston 1034, and a second cylinder 1039. The second cylinder 1039 has a second rod cover 1035, a second tube 1036, a second head cover 1037, and a second connection ring 1038. The second bucket cylinder 1048 maintains a similar length to the first bucket cylinder 1044, and in order to position the rotational arm stand 1065 between the second lower arm 1024 and the second upper arm 1028, the length of the second tube 1036 is reduced compared to the length of the first tube of the first bucket cylinder 1044.

Thus, the second bucket cylinder 1048 has a third length L3 that is smaller than the first length L1 of the first bucket cylinder 1044 between the center of the second connection ring 1038 and the end of the second rod 1033. In addition, the second arm 1029 is formed such that the length of the second arm 1029 is reduced compared to the length of the first arm 1022 in response to the length of the second bucket cylinder 1044. Accordingly, the second arm 1029 has a fourth length L4 smaller than the second length L2 of the first arm 1022 between the center of a second boom coupling hole part 1026 and the end of the second lower arm 1024.

In a state where the third excavator 1088 corresponds the third length L3 to the second bucket cylinder 1048 and the fourth length L4 to the second arm 1029 as shown in FIG. 5, during operation of the third excavator 1088, the second bucket 1018 makes a first semicircular movement (radius D1) relative to the second lower arm 1024, and the second arm 1029, together with the rotational arm stand 1065, makes a second semicircular movement (radius D2) relative to the boom 1078 as shown in FIG. 7.

However, because the second bucket 1018 maintains a predetermined small gap 1019 from a ground 1005, a driver of the third excavator 1088 is concerned about abnormal contact between the second bucket 1018 and the ground 1005 during operation of the third excavator 1088, and needs to frequently raise the second arm 1029 in an upward direction M by means of the boom 1078. Meanwhile, referring to FIGS. 5 and 6, the third excavator 1088 has an end of the second rod 1033 on an extension line X2 that passes perpendicularly through the second arm cylinder coupling hole part 1027 when the second rod 1033 is minimally exposed from the second rod cover 1035.

In addition, the second lower arm 1024 and the rotational arm stand 1065 have a center joint 1023 therein, and the center joint 1023 is exposed to the outside through a second slip entry/exit hole part 1025 in the second upper arm 1028. The center joint 1023 and the slip entry/exit hole part 1025 are spaced apart from the extension line X2 in the second upper arm 1028. Overall, as shown in FIGS. 5 and 7, considering the shape of the third excavator 1088, there is great difficulty in additionally mounting an attachment between the second bucket 1018 and the second lower arm 1024 in the case of the third excavator 1088.

### Disclosure

### Technical Problem

The present disclosure is intended to solve the above problems occurring in the related art. An objective of the present disclosure is to provide an excavating apparatus suitable for easily inserting a slip ring into a center joint without disassembling a lower arm, a rotational arm stand, and an upper arm while surrounding the center joint with the lower arm, the rotational arm stand, and the upper arm.

An objective of the present disclosure is to provide an excavating apparatus suitable for increasing flexibility and margin of excavation work by applying a rotational arm stand to an arm so that the arm is subdivided based on the rotational arm stand and having a lower arm below the rotational arm stand and an upper arm above the rotational arm stand, and by changing the shape of the upper arm to reduce the length of the upper arm along the longitudinal direction of the arm, and changing the structure of a bucket cylinder that is rotatably coupled to the lower arm so that the length of the lower arm is shortened along the longitudinal direction of the arm.

### Technical Solution

In order to achieve the above mentioned objectives, there is provided an excavating apparatus including: a lower arm having a width that gradually increases from a first end to a second end and a fixing hole on an outer peripheral surface at the second end; a rotational arm stand located on the second end of the lower arm, having a disc shape, and rotationally fixed to the lower arm; an upper arm located on the rotational arm stand to be fixed to the rotational arm stand, and having a guide hole in an outer peripheral surface thereof on the rotational arm stand; a center joint which is surrounded by the lower arm, the rotational arm stand, and the upper arm, and is exposed to outside via the fixing hole of the lower arm and the guide hole of the upper arm; and a slip ring which is inserted into or separated from the center joint via the guide hole of the upper arm, wherein, in appearance, a width of a central space between the upper arm and the center joint may be larger than diameters of two hydraulic lines based on a top of the center joint in the guide hole of the upper arm.

The rotational arm stand may include: a lower rotary table and an upper rotary table, which are sequentially stacked on the lower arm; and a drive motor part that rotates the lower rotary table relative to the upper rotary table, wherein the rotational arm stand may be coupled to the lower arm and the upper arm by means of the lower rotary table and the upper rotary table, respectively.

When the lower arm has a seating hole on a surface perpendicular to a longitudinal direction of the lower arm, and when the rotational arm stand has the lower rotary table and the upper rotary table, which are sequentially stacked, and a through hole passing through central areas of the lower rotary table and the upper rotary table, the center joint may include: a joint housing inserted into the seating hole in the lower arm and fixed to the lower rotary table of the rotational arm stand; and a joint shaft inserted into the joint housing, rotating relative to the joint housing, and protruding toward the upper arm via the through hole of the rotational arm stand.

The slip ring may include: a fixing part located on an outside of the center joint; a rotary part inserted into the fixing part, located on the outside of the center joint, and rotating relative to the fixing part; an input end starting from the rotary part and extending toward a first side of the rotary part; and an output end starting from the rotary part and extending toward a second side of the rotary part.

When the center joint has a joint housing and a joint shaft inserted into the joint housing, and when the slip ring is inserted into the joint housing and the joint shaft while separated from the center joint, the output end of the slip ring may be inserted into the guide hole of the upper arm, may pass sequentially through the joint shaft and joint housing, may be exposed to the fixing hole of the lower arm, and may then be pulled toward the outside from the fixing hole of the lower arm, the fixing part and the rotary part of the slip ring are partially inserted into the joint shaft while being drawn toward the guide hole in the upper arm during the pulling of the output end, and the input end of the slip ring may be drawn along with the fixing part and the rotary part towards the guide hole in the upper arm during the pulling of the output end, and may extend toward the outside starting from the rotary part past the guide hole in the upper arm.

When the center joint has a joint housing and a joint shaft inserted into the joint housing, and when the slip ring is separated from the joint housing and the joint shaft while coupled to the center joint, the input end of the slip ring may be pulled toward the outside from the guide hole in the upper arm, the fixing part and the rotary part of the slip ring may be separated from the joint shaft and are drawn toward the outside from the guide hole in the upper arm during the pulling of the input end, and the output end of the slip ring may sequentially pass through the joint housing and the joint shaft and be spaced apart from the joint shaft during the pulling of the input end.

The excavating apparatus may further include: a segment cover on the guide hole of the upper arm, wherein the upper arm may include: a rounded peripheral part on the center joint in the guide hole of the upper arm; and a plurality of coupling rings located on the rounded peripheral part, and the segment cover may include coupling holes and screw members aligned with the coupling rings on the rounded peripheral part, and the segment cover may be screw-coupled to the upper arm by inserting each screw member into each coupling hole of the segment cover and each coupling ring of the rounded peripheral part.

The excavating apparatus may further include: a segment cover on the guide hole of the upper arm, wherein the upper arm may include: a rounded peripheral part on the center joint in the guide hole of the upper arm; and a plurality of fitting grooves located on the rounded peripheral part, and the segment cover may include fitting protrusions aligned with the fitting grooves on the rounded peripheral part, and the segment cover may be fitted and coupled to the upper arm by inserting the fitting protrusions thereof into the fitting grooves of the rounded peripheral part.

The excavating apparatus may further include: a segment cover on the guide hole of the upper arm, wherein the upper arm may include: a rounded peripheral part on the center joint in the guide hole of the upper arm; and two auxiliary hinges on the rounded peripheral part, and the segment cover may include a main hinge and a hinge pin both of which are aligned with two auxiliary hinges on the rounded peripheral part, and the segment cover may be hinge-coupled to the upper arm by inserting the hinge pin into the individual auxiliary hinges of the rounded peripheral part and the main hinge of the segment cover.

The excavating apparatus may further include: a segment cover on the guide hole of the upper arm, wherein the upper arm may include: a rounded peripheral part on the center joint in the guide hole of the upper arm; two auxiliary hinges located in a central area of the rounded peripheral part; and two magnets respectively located on opposite edges of the rounded peripheral part, and the segment cover may include a main hinge and a hinge pin both of which are aligned with the two auxiliary hinges on the rounded peripheral part, and the segment cover may be hinge-coupled to the upper arm and is attracted to a magnetic force of the individual magnets on the rounded peripheral part by inserting the hinge pin into the individual auxiliary hinges of the rounded peripheral part and the main hinge of the segment cover.

When the upper arm has a rounded peripheral part positioned on the center joint in a guide hole on a first side of the upper arm and has an angled peripheral part located on the center joint in a guide hole on a second side of the upper arm, the guide hole of the rounded peripheral part may be opened larger in the upper arm than the guide hole of the angled peripheral part between the center joint and the upper arm based on a top of the center joint.

When the upper arm has a rounded peripheral part positioned on the center joint in a guide hole on a first side of the upper arm and has an angled peripheral part located on the center joint in a guide hole on a second side of the upper arm, the rounded peripheral part may be positioned deeper than the angled peripheral part in the upper arm based on a top of the center joint and may have a curvature same as that of a ceiling facing the center joint.

The excavating apparatus may further include: a bucket cylinder and a clamp cylinder, each located on a first side and a second side of the lower arm and rotationally fixed to the second end of the lower arm; a link structure located at the first end of the lower arm and rotationally fixed to the lower arm and the bucket cylinder; a tilt link located below the link structure and rotationally fixed to the link structure; a bucket rotationally fixed to the tilt link below the tilt link; and a clamp located at the first end of the lower arm and rotationally fixed to the lower arm and the clamp cylinder.

In addition, an excavating apparatus according to the present disclosure includes a bucket, a lower arm, a rotational arm stand, an upper arm, and a boom, which are sequentially arranged toward a cab and rotated with respect to each other at a work site; and a bucket cylinder and an arm cylinder located around the lower arm and the boom and rotationally coupled to the bucket and the upper arm, respectively, wherein when the upper arm has a boom coupling hole part and an arm cylinder coupling hole part, which are sequentially positioned on the rotational arm stand, the lower arm may be located on a central axis of the upper arm, which passes perpendicularly through the arm cylinder coupling hole part of the upper arm and overlaps more than half a length of the lower arm; the upper arm may protrude the boom coupling hole part further than the rotational arm stand toward a side of the upper arm just above the rotational arm stand; and the bucket cylinder may be rotatably attached to the lower arm by means of opposite sides of the bucket cylinder.

When a multi-joint link is provided between the bucket, the lower arm, and the bucket cylinder, the lower arm may be sequentially axially coupled to the bucket and the multi-joint link along a longitudinal direction of the lower arm right next to the central axis of the upper arm.

The bucket cylinder may include a rod, a piston, and a cylinder, wherein the cylinder may include: a head cover located directly below the rotational arm stand; a tube coupled to the head cover; a rod cover coupled to the tube on an opposite side of the head cover; and a hanger for rotationally coupling the tube to the lower arm, wherein the rod may be located on an inside and an outside of the tube, may be surrounded by the rod cover, and may move relative to the cylinder whereas the piston may be located on the inside of the tube and may move together with the rod.

When a multi-joint link is provided that is located across opposite sides of the lower arm and axially coupled to the lower arm, the rod may be axially coupled with the multi-joint link and may be minimally exposed from the rod cover around the lower arm so as to move away from the central axis of the upper arm together with the multi-joint link or may be maximally exposed from the rod cover so as to approach the central axis of the upper arm together with the multi-joint link.

When the rod is minimally exposed from the rod cover, the rod, the rod cover, the tube, and the head cover may gradually move away from the central axis of the upper arm in an order of the rod, the rod cover, the tube, and the head cover while spacing the rod from the central axis of the upper arm.

When the rod is maximally exposed from the rod cover, the rod, the rod cover, the tube, and the head cover may gradually move away from the central axis of the upper arm in an order of the rod cover, the rod, the rod cover, the tube, and the head cover while positioning the rod on the central axis of the upper arm.

When the lower arm has a bracket on each side of the tube, the hanger may include: a support part that has a cylindrical protrusion piece surrounding the tube and extending toward the bracket; and a locking part that curvedly surrounds the protrusion piece together with the bracket on the bracket and is screw-coupled with the bracket.

When the rod is minimally exposed from the rod cover, a multi-joint link rotationally coupled to the bucket, the lower arm, and the bucket cylinder may be provided, wherein the multi-joint link may be axially coupled to the lower arm right next to the central axis of the upper arm, may be further away from the bucket than the lower arm from the central axis of the upper arm to be axially coupled to the bucket, and may be further away from the bucket cylinder than the bucket from the central axis of the upper arm to be axially coupled to the rod of the bucket cylinder.

When the rod is maximally exposed from the rod cover, a multi-joint link rotationally coupled to the bucket, the lower arm, and the bucket cylinder may be provided, wherein the multi-joint link may be located across left and right sides of the central axis of the upper arm right next to the central axis of the upper arm to be axially coupled to the lower arm and the rod, and may be further away from the bucket than the lower arm from the central axis of the upper arm to be axially coupled to the bucket.

The rotational arm stand may have a lower rotary table and an upper rotary table, which are sequentially stacked between the lower arm and the upper arm, may respectively fix the lower rotary table and the upper rotary table to the lower arm and the upper arm, may rotate the lower rotary table relative to the upper rotary table, and may have a center joint that passes through the lower rotary table and the upper rotary table together with the lower arm, wherein the center joint may be located on the central axis of the upper arm.

When the upper arm has a slip entry/exit hole part, the boom coupling hole part, and the arm cylinder coupling hole part on lower, middle, and upper sides of the upper arm, and when the lower arm and the rotational arm stand have the center joint on the central axis of the upper arm, the slip entry/exit hole part of the upper arm may expose the center joint to an outside on the central axis of the upper arm to induce a coupling of a slip to the center joint or separation of the slip from the center joint.

When the upper arm has a slip entry/exit hole part, the boom coupling hole part, and the arm cylinder coupling hole part on lower, middle, and upper sides of the upper arm, the slip entry/exit hole part of the upper arm may be located on the central axis of the upper arm and may be located at a level same as that of the boom coupling hole part in a direction perpendicular to the central axis of the upper arm.

When the upper arm has a slip entry/exit hole part, the boom coupling hole part, and the arm cylinder coupling hole part on lower, middle, and upper sides of the upper arm, the slip entry/exit hole part and the arm cylinder coupling hole part of the upper arm may be located on the central axis of the upper arm.

When a rotary link coupled to the bucket and the lower arm, the bucket cylinder located on a first side of the lower arm and coupled to the lower arm, a clamp cylinder located on a second side of the lower arm and coupled to the lower arm, a clamp located at an end of the lower arm and coupled to the lower arm, and a multi-joint link coupled to the lower arm, the rotary link, and the bucket cylinder may be provided, the bucket and the rotary link may rotate around the central axis of the upper arm due to retraction or extension of the multi-joint link according to an operation of the bucket cylinder, whereas the clamp may be axially coupled to the lower arm near the central axis of the upper arm, and may move relative to the lower arm to rotate up and down according to an operation of the clamp cylinder.

### Advantageous Effects

An excavating apparatus of the present disclosure is provided with:

a lower arm, a rotational arm stand, and an upper arm that are sequentially stacked to form a multi-joint arm; a fixing hole located on the lower arm just below the rotational arm stand; a guide hole located on the upper arm just above the rotational arm stand; and a center joint inserted into the lower arm, the rotational arm stand, and the upper arm,

wherein a joint housing of the center joint is exposed to the fixing hole of the lower arm whereas a joint shaft of the center joint is exposed to the guide hole of the upper arm, and based on the top of the center joint in the guide hole of the upper arm, the width of a central space between the joint shaft and the upper arm is larger than the diameters of two hydraulic lines, so that

while surrounding the center joint with the lower arm, the rotational arm stand, and the upper arm, a slip ring can be easily inserted into the center joint without disassembling the lower arm, the rotational arm stand, and the upper arm.

According to an excavating apparatus of the present disclosure,

by applying a rotational arm stand to an arm so that the arm is subdivided based on the rotational arm stand and having a lower arm below the rotational arm stand and an upper arm above the rotational arm stand,

by making the upper arm larger than the rotational arm stand in the direction perpendicular to the longitudinal direction of the arm while reducing the shape of the upper arm toward the rotational arm stand along the longitudinal direction of the arm,

by removing a connection ring from a cylinder in a bucket cylinder to rotationally couple a tube to the lower arm by means of the outer peripheral surface of the tube, and

by properly reflecting the rotation of a bucket according to the minimum and maximum exposed length of a rod from a rod cover of the cylinder around the lower arm,

the shape of the upper arm is changed to reduce the length of the upper arm along the longitudinal direction of the arm, and the structure of a bucket cylinder that is rotatably coupled to the lower arm is changed so that the length of the lower arm is shortened along the longitudinal direction of the arm, flexibility of excavation work can be increased.

### Description of Drawings

FIG. 1 is a side view showing a first excavator according to the related art;
FIG. 2 is an image showing the coupling relationship between a center joint and a slip ring in the first excavator of FIG. 1;
FIG. 3 is an image showing the center joint (slip ring not shown) located on a lower rotary arm, a rotary driver, and an upper rotary arm in the first excavator of FIG. 1;
FIG. 4 is a side view showing a second excavator according to an embodiment of the related art;
FIG. 5 is a side view showing a third excavator according to another embodiment of the related art;
FIG. 6 is a side view schematically showing a bucket cylinder in the third excavator of FIG. 5;
FIG. 7 is a schematic view showing the operation of the third excavator of FIG. 5;
FIG. 8 is a side view partially showing a first excavating apparatus according to the present disclosure;
FIG. 9 is an exploded perspective view partially showing the first excavating apparatus of FIG. 8;
FIG. 10 is an enlarged image showing a center joint located on a lower arm, a drive motor part, and an upper arm in the first excavating apparatus of FIG. 8 by region;
FIG. 11 is an image showing the positional relationship between the upper arm and the center joint of FIG. 10;
FIG. 12 is an image showing a segment cover positioned on the upper arm of FIG. 11;
FIG. 13 shows a first modification of the upper arm and fragment cover of FIG. 12;
FIG. 14 shows a second modification of the upper arm and fragment cover of FIG. 12;
FIG. 15 shows a third modification of the upper arm and the segment cover of FIG. 12;
FIG. 16 is a side view showing a second excavating apparatus according to the present disclosure;
FIG. 17 is a partially enlarged side view of the second excavating apparatus of FIG. 16;
FIG. 18 is an exploded perspective view of the second excavating apparatus of FIG. 16;
FIG. 19 is a partially enlarged perspective view of a bucket cylinder of FIG. 18;
FIG. 20 is a schematic view showing the maximum exposed rod from a cylinder in the bucket cylinder of FIG. 19;
FIG. 21 is a schematic view showing the minimum exposed rod from a cylinder in the bucket cylinder of FIG. 19; and
FIG. 22 is a side view showing a rotary link, a clamp, and a clamp cylinder additionally mounted on the second excavating apparatus of FIG. 16.

### Mode for Invention

Hereinafter, preferred embodiments of the present disclosure will be described in detail with reference to the attached drawings in order to enable those skilled in the art to easily practice the present disclosure.

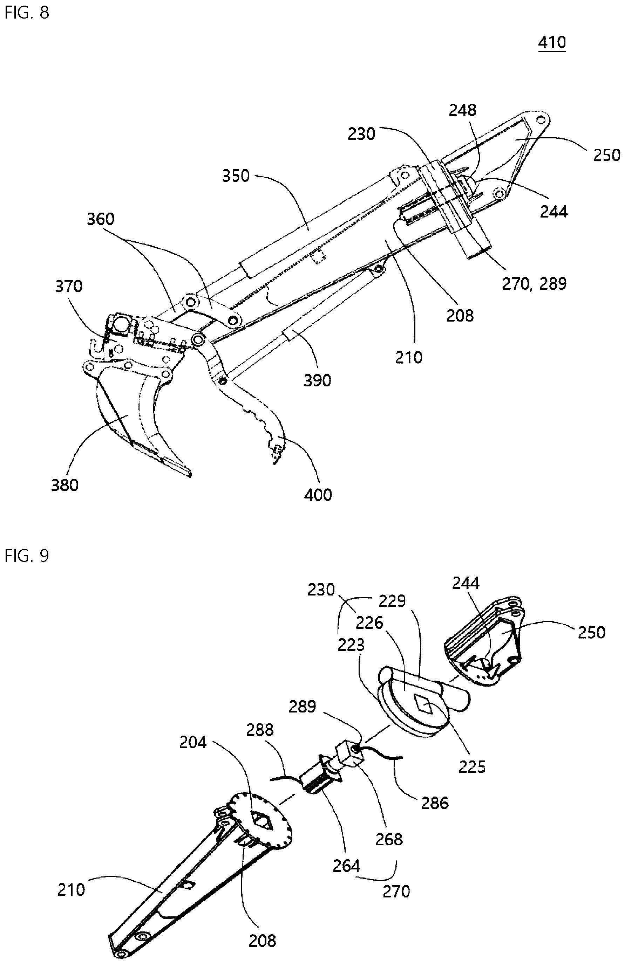

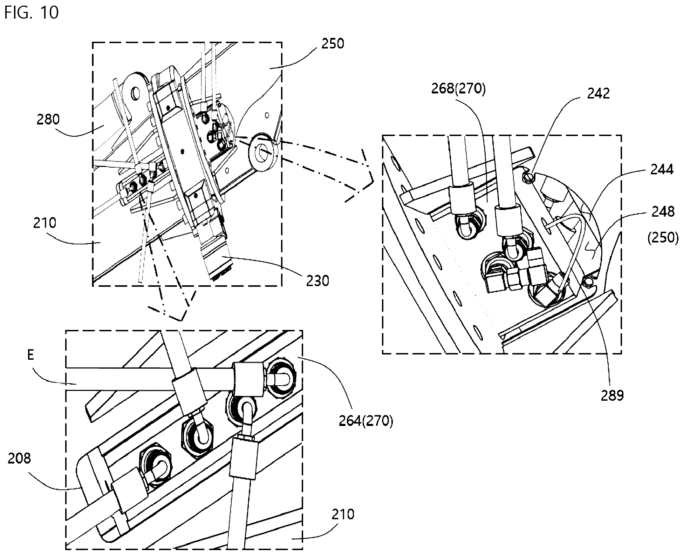

FIG. 8 is a side view partially showing a first excavating apparatus according to the present disclosure, FIG. 9 is an exploded perspective view partially showing the first excavating apparatus of FIG. 8, and FIG. 10 is an enlarged image showing a center joint located on a lower arm, a drive motor part, and an upper arm in the first excavating apparatus of FIG. 8 by region.

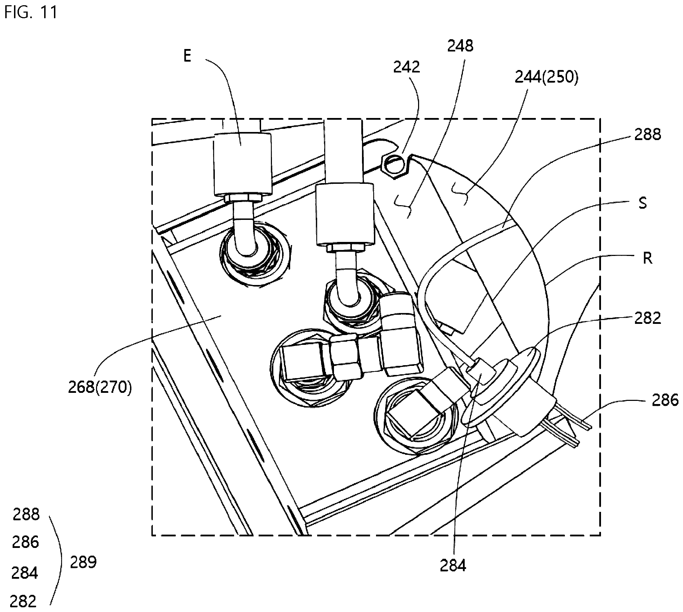

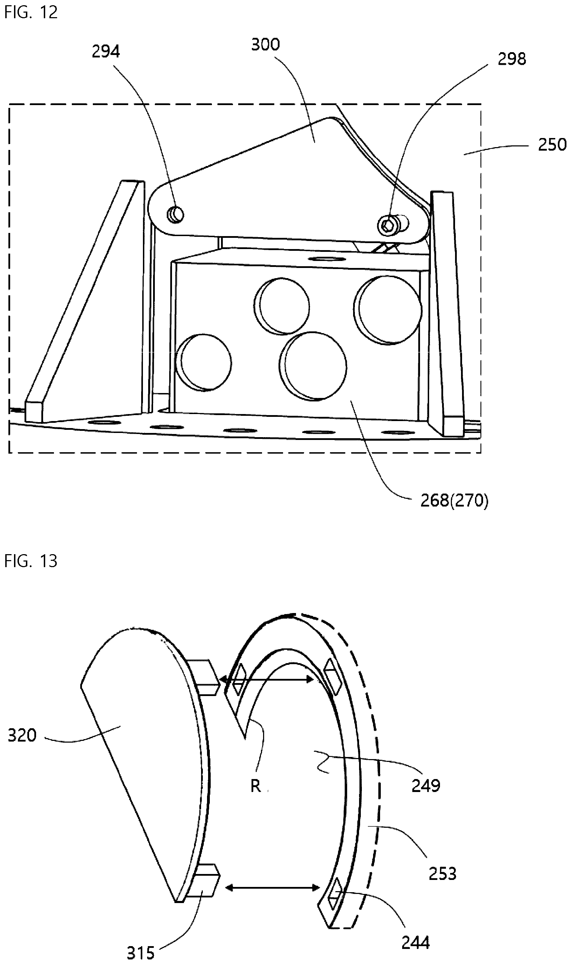

FIG. 11 is an image showing the positional relationship between the upper arm and the center joint of FIG. 10, and FIG. 12 is an image showing a segment cover positioned on the upper arm of FIG. 11.

In this case, FIGS. 8 to 12, together with FIGS. 13 to 15 below, show an improved configuration of the first excavator of FIGS. 1 to 3.

Referring to FIGS. 8 to 12, a first excavating apparatus 410 includes a lower arm 210, a rotational arm stand 230, an upper arm 250, a center joint 270 and a slip ring 289 as shown in FIG. 8. When viewed schematically, the lower arm 210 has a width that gradually increases from one end to the other end and has a fixing hole 208 on the outer peripheral surface at the other end thereof as shown in FIGS. 8 to 10.

The rotational arm stand 230 is located on the other end of the lower arm 210, has a disk shape, and is rotationally fixed to the lower arm 210 as shown in FIGS. 8 to 10. The upper arm 250 is located on the rotational arm stand 230, is fixed to the rotational arm stand 230, and has a guide hole 244 on the outer peripheral surface of the rotational arm stand 230 as shown in FIGS. 8 to 10.

The center joint 270 is surrounded by the lower arm 210, the rotational arm stand 230, and the upper arm 250, and is exposed to the outside through the fixing hole 208 of the lower arm 210 and the guide hole 244 of the upper arm 250 as shown in FIGS. 8 to 10. Referring to FIG. 10, the slip ring 289 is directly inserted into the center joint 270 from the outside through the guide hole 244 of the upper arm 250 or is directly separated from the center joint 270 toward the outside.

The center joint 270 and the slip ring 289 have the same shape as the center joint 60 and the slip ring 80 in FIG. 2. At this time, referring to FIGS. 10 and 11, in appearance, the width of a central space between the upper arm 250 and the center joint 270 is larger than the diameters of two hydraulic lines E based on the top of the center joint 270 in the guide hole 244 of the upper arm 250.

To be specific, as shown in FIGS. 8 to 10, the rotational arm stand 230 includes a lower rotary table 223 and an upper rotary table 226 that are sequentially stacked on the lower arm 210, and a drive motor part 229 that rotates the lower rotary table 223 relative to the upper rotary table 226. The rotational arm stand 230 is coupled to the lower arm 210 and the upper arm 250 by means of the lower rotary table 223 and the upper rotary table 226, respectively.

When the lower arm 210 has a seating hole 204 on a surface perpendicular to the longitudinal direction of the lower arm 210 as shown in FIG. 9, and when the rotational arm stand 230 has the lower rotary table 223 and the upper rotary table 226, which are sequentially stacked, and a through hole 225 passing through central areas of the lower rotary table 223 and the upper rotary table 226 as shown in FIG. 9, the center joint 270 includes a joint housing 264 and a joint shaft 268 as shown in FIGS. 8 to 10.

Referring to FIGS. 9 and 10, the joint housing 264 is inserted into the seating hole 204 in the lower arm 210 and is fixed to the lower rotary table 223 of the rotational arm stand 230. Referring to FIGS. 9 and 10, the joint shaft 268 is inserted into the joint housing 264, rotates relative to the joint housing 264, and protrudes toward the upper arm 250 via the through hole 225 of the rotational arm stand 230.

Referring to FIGS. 9 to 11, the slip ring 289 includes: a fixing part 282 located outside the center joint 270; a rotary part 284 inserted into the fixing part 282, located outside the center joint 270, and rotating relative to the fixing part 282; an input end 286 starting from the rotary part 284 and extending toward one side of the rotary part 284; and an output end 288 starting from the rotary part 284 and extending toward the other side of the rotary part 284.

When the center joint 270 has the joint housing 264 and the joint shaft 268 inserted into the joint housing 264 as shown in FIGS. 9 and 10, and when the slip ring 289 is inserted into the joint housing 264 and the joint shaft 268 while separated from the center joint 270 as shown in FIGS. 9 and 10, the output end 288 of the slip ring 289 is, referring to FIGS. 9 to 11, inserted into the guide hole 244 of the upper arm 250, passes sequentially through the joint shaft 268 and the joint housing 264, is exposed to the fixing hole 208 of the lower arm 210, and is then pulled outward from the fixing hole 208 of the lower arm 210.

In addition, referring to FIGS. 9 to 11, the fixing part 282 and the rotary part 284 of the slip ring 289 are partially inserted into the joint shaft 268 while being drawn toward the guide hole 244 of the upper arm 250 during the pulling of the output end 288. Referring to FIGS. 9 to 11, the input end 286 of the slip ring 289 is drawn toward the guide hole 244 of the upper arm 250 along with the fixing part 282 and the rotary part 284 during the pulling of the output end 288, and extends outward through the guide hole 244 of the upper arm 250 starting from the rotary part 284.

On the other hand, when the center joint 270 has the joint housing 264 and the joint shaft 268 inserted into the joint housing 264 as shown in FIGS. 9 and 10, and when the slip ring 289 is separated from the joint housing 264 and the joint shaft 268 while coupled to the center joint 270 as shown in FIGS. 9 and 10, the input end 286 of the slip ring 289 is, referring to FIGS. 9 to 11, pulled outward from the guide hole 244 of the upper arm 250.

In addition, referring to FIGS. 9 to 11, the fixing part 282 and the rotary part 284 of the slip ring 289 are separated from the joint shaft 268 during the pulling of the input end 286 and are drawn outward from the guide hole 244 of the upper arm 250. Referring to FIGS. 9 to 11, the output end 288 of the slip ring 289 passes sequentially through the joint housing 264 and the joint shaft 268 and is spaced apart from the joint shaft 268 during the pulling of the input end 286.

Referring to FIGS. 11 and 12, the first excavating apparatus 410 further includes a segment cover 300 on the guide hole 244 of the upper arm 250. At this time, as shown in FIGS. 10 and 11, the upper arm 250 has a rounded peripheral part R on the center joint 270 in the guide hole 244 of the upper arm 250, and a plurality of coupling rings 242 located on the rounded peripheral part R. Referring to FIGS. 10 to 12, the segment cover 300 has a coupling hole 294 and a screw member 298 aligned with the coupling ring 242 of the rounded peripheral part R, and is screw-coupled to the upper arm 250 by inserting the screw member 298 into the coupling hole 294 of the segment cover 300 and the coupling ring 242 of the rounded peripheral part R.

Referring to FIGS. 8, 10, and 11, when the upper arm 250 has the rounded peripheral part R positioned on the center joint 270 in the guide hole 244 on one side of the upper arm 250 and has an angled peripheral part S located on the center joint 270 in a guide hole 248 on the other side of the upper arm 250, the guide hole 244 of the rounded peripheral part R is opened larger in the upper arm 250 than the guide hole 248 of the angled peripheral part S between the center joint 270 and the upper arm 250 based on the top of the center joint 270 as shown in FIGS. 8, 10, and 11.

In addition, referring to FIGS. 8, 10, and 11, when the upper arm 250 has the rounded peripheral part R positioned on the center joint 270 in the guide hole 244 on one side of the upper arm 250 and has the angled peripheral part S located on the center joint 270 in the guide hole 248 on the other side of the upper arm 250, the rounded peripheral part R is positioned deeper than the angled peripheral part S in the upper arm 250 based on the top of the center joint 270 and has the same curvature as a ceiling facing the center joint 270 as shown in FIGS. 10 and 11.

Meanwhile, as shown in FIG. 8, the first excavating apparatus 410 further includes a bucket cylinder 350, a link structure 360, a tilt link 370, a bucket 380, a clamp cylinder 390, and a clamp 400. The bucket cylinder 350 and the clamp cylinder 390 are located on one side and the other side of the lower arm 210, respectively, and are rotationally fixed to the other end of the lower arm 210. The link structure 360 is located at one end of the lower arm 210 and is rotationally fixed to the lower arm 210 and the bucket cylinder 350.

In addition, the tilt link 370 is located below the link structure 360 and is rotationally fixed to the link structure 360. The bucket 380 is rotationally fixed to the tilt link 370 below the tilt link 370. The clamp 400 is located at one end of the lower arm 210 and is rotationally fixed to the lower arm 210 and the clamp cylinder 390.

FIG. 13 shows a first modification of the upper arm and fragment cover of FIG. 12.

Referring to FIG. 13, an upper arm 253 and a segment cover 320 according to the first modification of the present disclosure have a different structure from the upper arm 250 and the segment cover 300 of FIGS. 10 to 12. To be specific, the first excavating apparatus 410 further includes the segment cover 320 on a guide hole 249 of the upper arm 253.

Referring to FIGS. 11 and 13, the upper arm 253 has a rounded peripheral part R on a center joint 270 in the guide hole 249 of the upper arm 253, and a plurality of fitting grooves 244 located in the rounded peripheral part R. As shown in FIG. 9, the segment cover 320 has a fitting protrusion 315 that aligns with the fitting groove 244 of the rounded peripheral part R, and the fitting protrusion 315 of the segment cover 320 is inserted into the fitting groove 244 of the rounded peripheral part R so that the segment cover 320 is fitted and coupled to the upper arm 253.

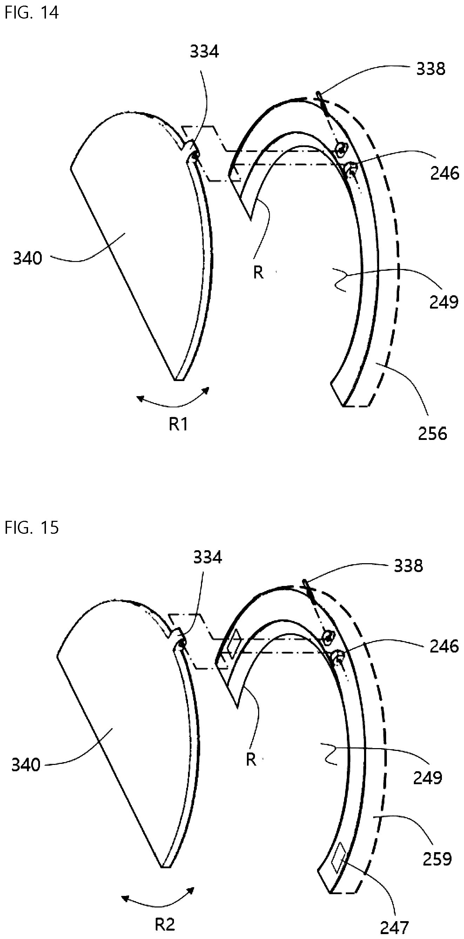

FIG. 14 shows a second modification of the upper arm and fragment cover of FIG. 12.

Referring to FIG. 14, an upper arm 256 and a segment cover 340 according to the second modification of the present disclosure have a different structure from the upper arm 250 and the segment cover 300 of FIGS. 10 to 12. To be specific, the first excavating apparatus 410 further includes the segment cover 340 on a guide hole 249 of the upper arm 256.

Referring to FIGS. 11 and 14, the upper arm 256 has a rounded peripheral part R on a center joint 270 in the guide hole 249 of the upper arm 256, and two auxiliary hinges 246 on the rounded peripheral part R. As shown in FIG. 14, the segment cover 340 has a main hinge 334 and a hinge pin 338 aligned with two auxiliary hinges 246 on the rounded peripheral part R, and the hinge pin 338 is inserted into the individual auxiliary hinges 246 of the rounded peripheral part R and the main hinge 334 of the segment cover 340 so that the segment cover 340 is hinge-coupled to the upper arm 256.

That is, the segment cover 340 is hinge-coupled to the upper arm 256 and is rotationally R1 fixed to the upper arm 256.

FIG. 15 shows a third modification of the upper arm and the segment cover of FIG. 12.

Referring to FIG. 15, an upper arm 259 and a segment cover 340 according to the second modification of the present disclosure have a different structure from the upper arm 250 and the segment cover 300 of FIGS. 10 to 12. To be specific, the first excavating apparatus 410 further includes the segment cover 340 on a guide hole 249 of the upper arm 259.

Referring to FIGS. 11 and 15, the upper arm 259 has a rounded peripheral part R on a center joint 270 in the guide hole 249 of the upper arm 259, two auxiliary hinges 246 located in the central area of the rounded peripheral part R, and two magnets 247 located on opposite edges of the rounded peripheral part R. As shown in FIG. 15, the segment cover 340 has a main hinge 334 and a hinge pin 338 aligned with two auxiliary hinges 246 on the rounded peripheral part R, and the hinge pin 338 is inserted into the individual auxiliary hinges 246 of the rounded peripheral part R and the main hinge 334 of the segment cover 340 so that the segment cover 340 is hinge-coupled to the upper arm 256 and is attracted to the magnetic force of the individual magnets 247 on the rounded peripheral part R.

That is, the segment cover 340 is hinge-coupled to the upper arm 256 and is rotationally R2 fixed to the upper arm 259.

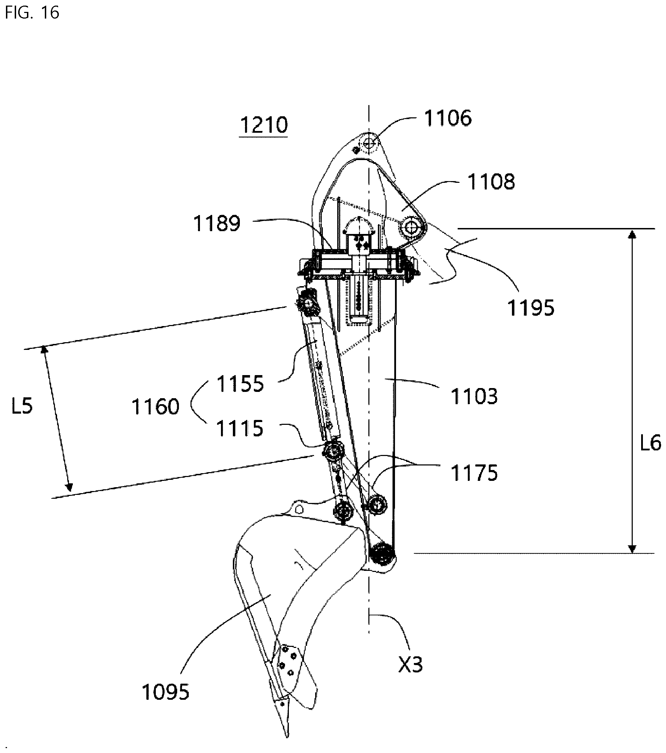

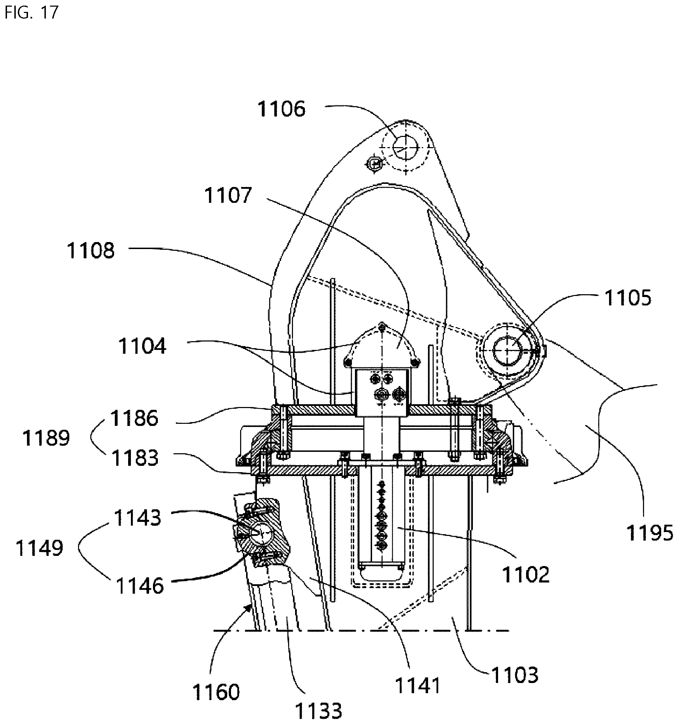

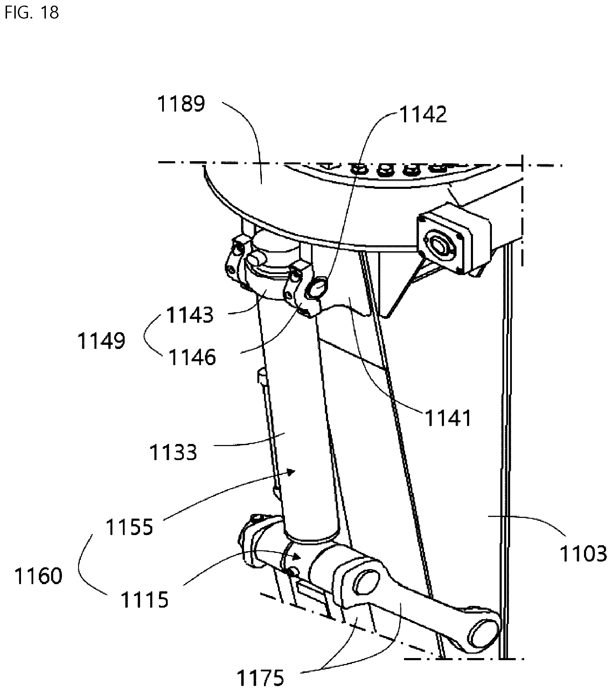

FIG. 16 is a side view showing a second excavating apparatus according to the present disclosure, FIG. 17 is a partially enlarged side view of the second excavating apparatus of FIG. 16, and FIG. 18 is an exploded perspective view of the second excavating apparatus of FIG. 16.

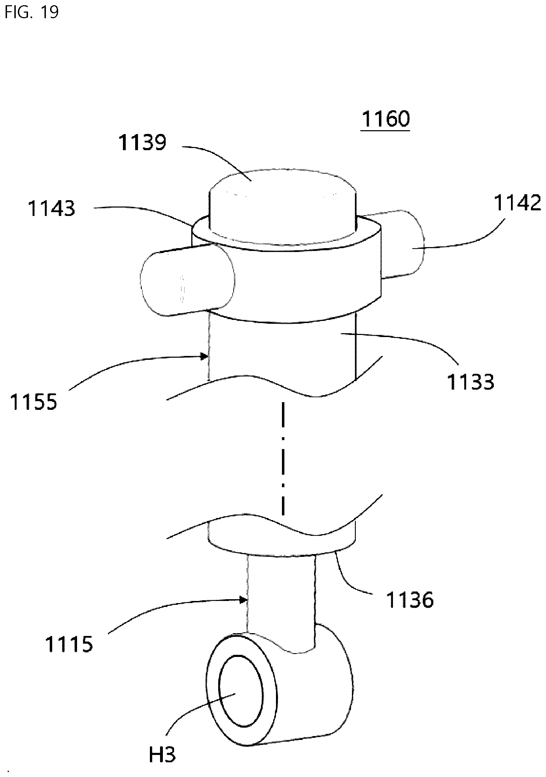

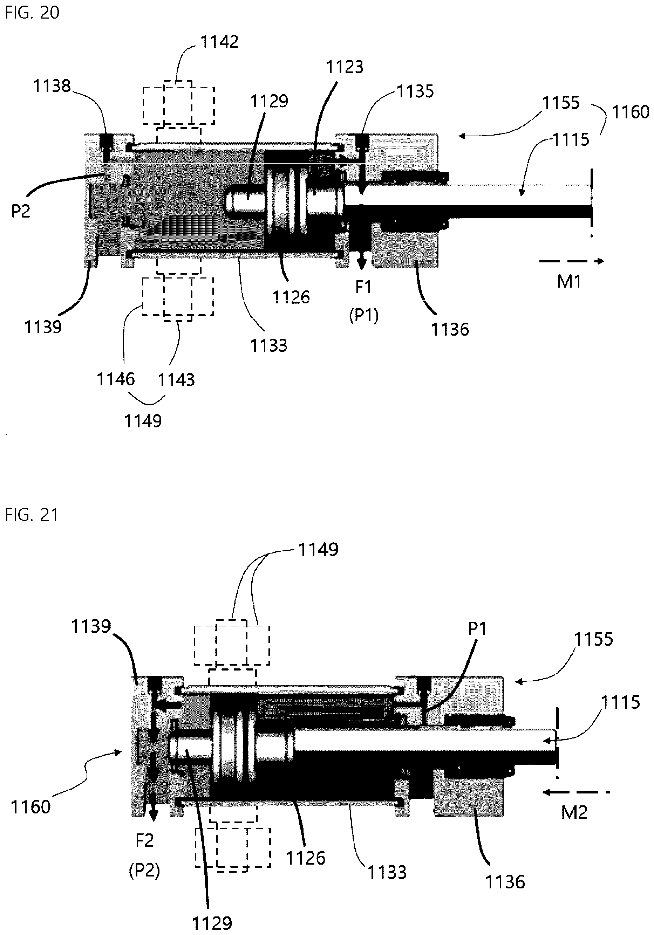

FIG. 19 is a partially enlarged perspective view of a bucket cylinder of FIG. 18, and FIG. 20 is a schematic view showing the maximum exposed rod from a cylinder in the bucket cylinder of FIG. 19.

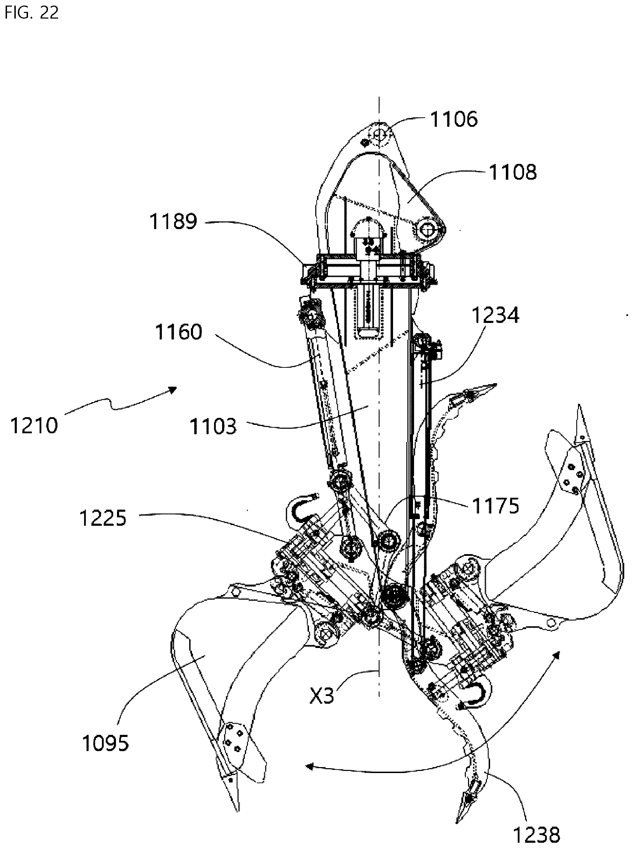

In addition, FIG. 21 is a schematic view showing the minimum exposed rod from a cylinder in the bucket cylinder of FIG. 19, and FIG. 22 is a side view showing a rotary link, a clamp, and a clamp cylinder additionally mounted on the second excavating apparatus of FIG. 16.

In this case, FIGS. 16 to 22 show improved configurations of the second and third excavators of FIGS. 4 to 7.

Referring to FIGS. 16 to 22, a second excavating apparatus 1210 according to the present disclosure includes a bucket 1095, a lower arm 1103, a rotational arm stand 1189, an upper arm 1109, and a boom 1195, which are sequentially arranged toward a cab and rotated with respect to each other at a work site. The second excavating apparatus 1210 also includes a bucket cylinder 1160 and an arm cylinder (not shown in the drawing) located around the lower arm 1103 and the boom 1195 and rotationally coupled to the bucket 1095 and the upper arm 1108.

Schematically, as shown in FIGS. 16 and 17, when the upper arm 1108 has a boom coupling hole part 1105 and an arm cylinder coupling hole part 1106, which are sequentially positioned on the rotational arm stand 1189, the lower arm 1103 is located on a central axis of the upper arm 1108, which passes perpendicularly through the arm cylinder coupling hole part 1106 of the upper arm 1108 and overlaps more than half the length of the lower arm 1103 as shown in FIG. 16.

In addition, as shown in FIG. 17, the upper arm 1108 protrudes the boom coupling hole part 1105 further than the rotational arm stand 1189 toward the side of the upper arm 1108 just above the rotational arm stand 1189. As shown in FIGS. 16 to 19, the bucket cylinder 1160 is rotatably attached to the lower arm 1103 by means of opposite sides of the bucket cylinder 1160.

To be specific, when the second excavating apparatus 1210 has a multi-joint link 1175 between the bucket 1095, the lower arm 1103, and the bucket cylinder 1160, as shown in FIG. 16, the lower arm 1103 is sequentially axially coupled to the bucket 1095 and the multi-joint link 1175 along the longitudinal direction of the lower arm 1103 right next to the central axis X3 of the upper arm 1108.

Referring to FIGS. 16 to 21, the bucket cylinder 1160 has a rod 1115, a piston 1126, and a cylinder 1155. Referring to FIGS. 16 to 21, the cylinder 1155 has a head cover located directly below the rotational arm stand 1189, a tube 1133 coupled to the head cover 1139, a rod cover 1136 coupled to the tube 1133 on the opposite side of the head cover 1139, and a hanger 1149 for rotationally coupling the tube 1133 to the lower arm 1103.

Referring to FIGS. 16 to 21, the rod 1115 is located inside and outside the tube 1133, is surrounded by the rod cover 1136, and moves relative to the cylinder 1155. The piston 1126 is located inside the tube 1133 and moves together with the rod 1115 as shown in FIGS. 20 and 21. At this time, the bucket cylinder 1160 does not have the second connection ring 1038 of the second cylinder 1039 shown in FIG. 6.

That is because the second connection ring 1038 does not contribute to the moving speed of the second piston 1034 in the second cylinder 1039. That is, as shown in FIGS. 20 and 21, the cylinder 1155 manages the constant velocity motion and decelerated motion of the piston 1126. To be specific, the constant velocity motion of the piston 1126 is limited by using the size of the tube 1133.

In addition, the decelerated motion of the piston 1126 is limited by using a first adjustment screw 1135 exposed to a first flow path P1 in the rod cover 1136 and a first cushion ring 1123 facing from the piston 1126 to the rod cover 1136, as well as a second adjustment screw 1138 exposed to a second flow path P2 in the head cover 1139 and a second cushion ring 1129 facing from the piston 1126 to the head cover 1139.

When the second excavator 1210 has the multi-joint link 1175 located across opposite sides of the lower arm 1103 and axially coupled to the lower arm 1103, as shown in FIGS. 16 and 18, the rod 1115 is axially coupled as in FIGS. 16 and 18 with the multi-joint link 1175 and is minimally exposed as in FIG. 21 from the rod cover 1136 around the lower arm 1103 so as to move away from the central axis X3 of the upper arm 1108 together with the multi-joint link 1175 or is maximally exposed as in FIG. 20 from the rod cover 1136 so as to approach the central axis X3 of the upper arm 1108 together with the multi-joint link 1175.

When the rod 1115 is minimally exposed from the rod cover 1136 as in FIG. 21, the rod 1115, the rod cover 1136, the tube 1133, and the head cover 1139 gradually move away from the central axis X3 of the upper arm 1108 in an order of the rod 1115, the rod cover 1136, the tube 1133, and the head cover 1139 while spacing the rod 1115 from the central axis X3 of the upper arm 1108 as shown in FIGS. 16 and 21.

When the rod 1115 is maximally exposed from the rod cover 1136 as in FIG. 20, the rod 1115, the rod cover 1136, the tube 1133, and the head cover 1139 gradually move away from the central axis X3 of the upper arm 1108 in an order of the rod 1115, the rod cover 1136, the tube 1133, and the head cover 1139 while positioning the rod 1115 on the central axis X3 of the upper arm 1108 as shown in FIGS. 20 and 22.

Due to this, when the rod 1115 is minimally exposed from the rod cover 1136 as in FIG. 21, the rod 1115 moves along one direction M2 from the rod cover 1136 toward the head cover 1139. When the rod 1115 is maximally exposed from the rod cover 1136 as in FIG. 20, the rod 1115 moves along the other direction M1 from the head cover 1139 toward the rod cover 1136.

As shown in FIG. 18, when the lower arm 1103 has a bracket 1141 on each side of the tube 1133, the hanger 1149 includes: a support part 1143 that has a cylindrical protrusion piece 1142 surrounding the tube 1133 and extending toward the bracket B; and a locking part 1146 that curvedly surrounds the protrusion piece 1142 together with the bracket B on the bracket B and is screw-coupled with the bracket 1141 as shown in FIGS. 18 to 21.

When the rod 1115 is minimally exposed from the rod cover 1136 as in FIG. 21, the second excavating apparatus has the multi-joint link 1175 rotationally coupled to the bucket 1095, the lower arm 1103, and the bucket cylinder 1150 as shown in FIGS. 16 and 18. The multi-joint link 1175 is axially coupled to the lower arm 1103 right next to the central axis X3 of the upper arm 1108 as shown in FIG. 16.

In addition, as shown in FIG. 16, the multi-joint link 1175 is further away from the bucket 1095 than the lower arm 1103 from the central axis X3 of the upper arm 1108 and is axially coupled to the bucket 1095, and is further away from the bucket cylinder 1160 than the bucket 1095 from the central axis X3 of the upper arm 1108 and is axially coupled to the rod 1115 of the bucket cylinder 1160.

On the other hand, referring to FIGS. 20 and 22, when the rod 1115 is maximally exposed from the rod cover 1136, the second excavating apparatus has the multi-joint link 1175 rotationally coupled to the bucket 1095, the lower arm 1103, and the bucket cylinder 1160 as shown in FIGS. 16 and 18.

Referring to FIG. 22, the multi-joint link 1175 is located across the left and right sides of the central axis X3 of the upper arm 1108 right next to the central axis X3 of the upper arm 1108 to be axially coupled to the lower arm 1103 and the rod 1115, and is further away from the bucket 1095 than the lower arm 1103 from the central axis X3 of the upper arm 1108 to be axially coupled to the bucket 1095.

Referring to FIGS. 16 and 17, the rotational arm stand 1189 has a lower rotary table 1183 and an upper rotary table 1186 that are sequentially stacked between the lower arm 1103 and the upper arm 1108, and fixes the lower rotary table 1183 and the upper rotary table 1186 to the lower arm 1103 and the upper arm 1108, respectively.

In addition, as shown in FIGS. 16 and 17, the rotational arm stand 1189 rotates the lower rotary table 1183 relative to the upper rotary table 1186 and has a center joint 1102 that passes through the lower rotary table 1183 and the upper rotary table 1186 together with the lower arm 1103. The center joint 1102 is located on the central axis X3 of the upper arm 1108 as shown in FIGS. 16 and 17.

When the upper arm 1108 has a slip entry/exit hole part 1104, the boom coupling hole part 1105, and the arm cylinder coupling hole part 1106 on the lower, middle, and upper sides of the upper arm 1108 as shown in FIGS. 16 and 17, and when the lower arm 1103 and the rotational arm stand 1189 have the center joint 1102 on the central axis X3 of the upper arm 1108 as shown in FIGS. 16 and 17, the slip entry/exit hole part 1104 of the upper arm 1108 exposes the center joint 1102 to the outside on the central axis X3 of the upper arm 1108 to induce the coupling of a slip (not shown in the drawing) to the center joint 1102 or the separation of the slip from the center joint 1102.

In this case, the center joint 1102 rotates relative to the rotation of the rotational arm stand 1189 while engaging with the hydraulic line, and the slip is provided with a wire and rotates relative to the rotation of the center joint 1102. That is, the slip prevents twisting of the wire when the center joint 1102 rotates. The upper arm 1108 has a stopper 1107 to minimize the inflow of foreign substances through the slip entry/exit hole part 1104.

As shown in FIGS. 16 and 17, when the upper arm 1108 has the slip entry/exit hole part 1104, the boom coupling hole part 1105, and the arm cylinder coupling hole part 1106 on the lower, middle, and upper sides of the upper arm 1108, the slip entry/exit hole part 1104 of the upper arm 1108 is located on the central axis X3 of the upper arm 1108 and is located at the same level as the boom coupling hole part 1105 in a direction perpendicular to the central axis X3 of the upper arm 1108 as shown in FIGS. 16 and 17.

As shown in FIGS. 16 and 17, when the upper arm 1108 has the slip entry/exit hole part 1104, the boom coupling hole part 1105, and the arm cylinder coupling hole part 1106 on the lower, middle, and upper sides of the upper arm 1108, the slip entry/exit hole part 1104 and the arm cylinder coupling hole part 1106 of the upper arm 1108 are located on the central axis X3 of the upper arm 1108 as shown in FIGS. 16 and 17.

Meanwhile, as shown in FIG. 22, when the second excavating apparatus 1210 has a rotary link 1225 coupled to the bucket 1095 and the lower arm 1103, the bucket cylinder 1160 located on one side of the lower arm 1103 and coupled to the lower arm 1103, a clamp cylinder 1234 located on the other side of the lower arm 1103 and coupled to the lower arm 1103, a clamp 1238 located at the end of the lower arm 1103 and coupled to the lower arm 1103, and the multi-joint link 1175 coupled to the lower arm 1103, the rotary link 1225, and the bucket cylinder 1160, the bucket 1095 and the rotary link 1225 rotate around the central axis X3 of the upper arm 1108 due to the retraction or extension of the multi-joint link 1175 according to the operation of the bucket cylinder 1160 as shown in FIG. 22.

In addition, as shown in FIG. 22, the clamp 1238 is axially coupled to the lower arm 1103 near the central axis X3 of the upper arm 1108, and moves relative to the lower arm 1103 to rotate up and down according to the operation of the clamp cylinder 1234.

## Claims

1. An excavating apparatus, comprising:
a lower arm having a width that gradually increases from a first end to a second end and a fixing hole on an outer peripheral surface at the second end;
a rotational arm stand located on the second end of the lower arm, having a disc shape, and rotationally fixed to the lower arm;
an upper arm located on the rotational arm stand to be fixed to the rotational arm stand, and having a guide hole in an outer peripheral surface thereof on the rotational arm stand;
a center joint which is surrounded by the lower arm, the rotational arm stand, and the upper arm, and is exposed to outside via the fixing hole of the lower arm and the guide hole of the upper arm; and
a slip ring which is inserted into or separated from the center joint via the guide hole of the upper arm,
wherein, in appearance, a width of a central space between the upper arm and the center joint is larger than diameters of two hydraulic lines based on a top of the center joint in the guide hole of the upper arm.

2. The excavating apparatus of claim 1, wherein the rotational arm stand comprises:
a lower rotary table and an upper rotary table, which are sequentially stacked on the lower arm; and
a drive motor part that rotates the lower rotary table relative to the upper rotary table,
wherein the rotational arm stand is coupled to the lower arm and the upper arm by means of the lower rotary table and the upper rotary table, respectively.

3. The excavating apparatus of claim 1, wherein when the lower arm has a seating hole on a surface perpendicular to a longitudinal direction of the lower arm, and when the rotational arm stand has the lower rotary table and the upper rotary table, which are sequentially stacked, and a through hole passing through central areas of the lower rotary table and the upper rotary table, the center joint includes: a joint housing inserted into the seating hole in the lower arm and fixed to the lower rotary table of the rotational arm stand; and a joint shaft inserted into the joint housing, rotating relative to the joint housing, and protruding toward the upper arm via the through hole of the rotational arm stand.

4. The excavating apparatus of claim 1, wherein the slip ring comprises:
a fixing part located on an outside of the center joint;
a rotary part inserted into the fixing part, located on the outside of the center joint, and rotating relative to the fixing part;
an input end starting from the rotary part and extending toward a first side of the rotary part; and
an output end starting from the rotary part and extending toward a second side of the rotary part.

5. The excavating apparatus of claim 4, wherein when the center joint has a joint housing and a joint shaft inserted into the joint housing, and when the slip ring is inserted into the joint housing and the joint shaft while separated from the center joint, the output end of the slip ring is inserted into the guide hole of the upper arm, passes sequentially through the joint shaft and joint housing, is exposed to the fixing hole of the lower arm, and is then pulled toward the outside from the fixing hole of the lower arm, the fixing part and the rotary part of the slip ring are partially inserted into the joint shaft while being drawn toward the guide hole in the upper arm during the pulling of the output end, and the input end of the slip ring is drawn along with the fixing part and the rotary part towards the guide hole in the upper arm during the pulling of the output end, and extends toward the outside starting from the rotary part past the guide hole in the upper arm.

6. The excavating apparatus of claim 4, wherein when the center joint has a joint housing and a joint shaft inserted into the joint housing, and when the slip ring is separated from the joint housing and the joint shaft while coupled to the center joint, the input end of the slip ring is pulled toward the outside from the guide hole in the upper arm, the fixing part and the rotary part of the slip ring are separated from the joint shaft and are drawn toward the outside from the guide hole in the upper arm during the pulling of the input end, and the output end of the slip ring sequentially passes through the joint housing and the joint shaft and is spaced apart from the joint shaft during the pulling of the input end.

7. The excavating apparatus of claim 1, further comprising: a segment cover on the guide hole of the upper arm,
wherein the upper arm comprises:
a rounded peripheral part on the center joint in the guide hole of the upper arm; and
a plurality of coupling rings located on the rounded peripheral part, and
the segment cover comprises coupling holes and screw members aligned with the coupling rings on the rounded peripheral part, and the segment cover is screw-coupled to the upper arm by inserting each screw member into each coupling hole of the segment cover and each coupling ring of the rounded peripheral part.

8. The excavating apparatus of claim 1, further comprising: a segment cover on the guide hole of the upper arm,
wherein the upper arm comprises:
a rounded peripheral part on the center joint in the guide hole of the upper arm; and
a plurality of fitting grooves located on the rounded peripheral part, and
the segment cover comprises fitting protrusions aligned with the fitting grooves on the rounded peripheral part, and the segment cover is fitted and coupled to the upper arm by inserting the fitting protrusions thereof into the fitting grooves of the rounded peripheral part.

9. The excavating apparatus of claim 1, further comprising: a segment cover on the guide hole of the upper arm,
wherein the upper arm comprises:
a rounded peripheral part on the center joint in the guide hole of the upper arm; and
two auxiliary hinges on the rounded peripheral part, and
the segment cover comprises a main hinge and a hinge pin both of which are aligned with two auxiliary hinges on the rounded peripheral part, and the segment cover is hinge-coupled to the upper arm by inserting the hinge pin into the individual auxiliary hinges of the rounded peripheral part and the main hinge of the segment cover.

10. The excavating apparatus of claim 1, further comprising: a segment cover on the guide hole of the upper arm,
wherein the upper arm comprises:
a rounded peripheral part on the center joint in the guide hole of the upper arm;
two auxiliary hinges located in a central area of the rounded peripheral part; and
two magnets respectively located on opposite edges of the rounded peripheral part, and
the segment cover comprises a main hinge and a hinge pin both of which are aligned with the two auxiliary hinges on the rounded peripheral part, and the segment cover is hinge-coupled to the upper arm and is attracted to a magnetic force of the individual magnets on the rounded peripheral part by inserting the hinge pin into the individual auxiliary hinges of the rounded peripheral part and the main hinge of the segment cover.

11. The excavating apparatus of claim 1, wherein when the upper arm has a rounded peripheral part positioned on the center joint in a guide hole on a first side of the upper arm and has an angled peripheral part located on the center joint in a guide hole on a second side of the upper arm, the guide hole of the rounded peripheral part is opened larger in the upper arm than the guide hole of the angled peripheral part between the center joint and the upper arm based on a top of the center joint.

12. The excavating apparatus of claim 1, wherein when the upper arm has a rounded peripheral part positioned on the center joint in a guide hole on a first side of the upper arm and has an angled peripheral part located on the center joint in a guide hole on a second side of the upper arm, the rounded peripheral part is positioned deeper than the angled peripheral part in the upper arm based on a top of the center joint and has a curvature same as that of a ceiling facing the center joint.

13. The excavating apparatus of claim 1, further comprising:
a bucket cylinder and a clamp cylinder, each located on a first side and a second side of the lower arm and rotationally fixed to the second end of the lower arm;
a link structure located at the first end of the lower arm and rotationally fixed to the lower arm and the bucket cylinder;
a tilt link located below the link structure and rotationally fixed to the link structure;
a bucket rotationally fixed to the tilt link below the tilt link; and
a clamp located at the first end of the lower arm and rotationally fixed to the lower arm and the clamp cylinder.

14. An excavating apparatus, comprising:
a bucket, a lower arm, a rotational arm stand, an upper arm, and a boom, which are sequentially arranged toward a cab and rotated with respect to each other at a work site; and
a bucket cylinder and an arm cylinder located around the lower arm and the boom and rotationally coupled to the bucket and the upper arm, respectively,
wherein when the upper arm has a boom coupling hole part and an arm cylinder coupling hole part, which are sequentially positioned on the rotational arm stand, the lower arm is located on a central axis of the upper arm, which passes perpendicularly through the arm cylinder coupling hole part of the upper arm and overlaps more than half a length of the lower arm; the upper arm protrudes the boom coupling hole part further than the rotational arm stand toward a side of the upper arm just above the rotational arm stand; and the bucket cylinder is rotatably attached to the lower arm by means of opposite sides of the bucket cylinder.

15. The excavating apparatus of claim 14, wherein when a multi-joint link is provided between the bucket, the lower arm, and the bucket cylinder, the lower arm is sequentially axially coupled to the bucket and the multi-joint link along a longitudinal direction of the lower arm right next to the central axis of the upper arm.

16. The excavating apparatus of claim 14, wherein the bucket cylinder comprises a rod, a piston, and a cylinder,
wherein the cylinder comprises:
a head cover located directly below the rotational arm stand;
a tube coupled to the head cover;
a rod cover coupled to the tube on an opposite side of the head cover; and
a hanger for rotationally coupling the tube to the lower arm,
wherein the rod is located on an inside and an outside of the tube, is surrounded by the rod cover, and moves relative to the cylinder whereas the piston is located on the inside of the tube and moves together with the rod.

17. The excavating apparatus of claim 16, wherein when a multi-joint link is provided that is located across opposite sides of the lower arm and axially coupled to the lower arm, the rod is axially coupled with the multi-joint link and is minimally exposed from the rod cover around the lower arm so as to move away from the central axis of the upper arm together with the multi-joint link or is maximally exposed from the rod cover so as to approach the central axis of the upper arm together with the multi-joint link.

18. The excavating apparatus of claim 16, wherein when the rod is minimally exposed from the rod cover, the rod, the rod cover, the tube, and the head cover gradually move away from the central axis of the upper arm in an order of the rod, the rod cover, the tube, and the head cover while spacing the rod from the central axis of the upper arm.

19. The excavating apparatus of claim 16, wherein when the rod is maximally exposed from the rod cover, the rod, the rod cover, the tube, and the head cover gradually move away from the central axis of the upper arm in an order of the rod cover, the rod, the rod cover, the tube, and the head cover while positioning the rod on the central axis of the upper arm.

20. The excavating apparatus of claim 16, wherein when the lower arm has a bracket on each side of the tube, the hanger comprises: a support part that has a cylindrical protrusion piece surrounding the tube and extending toward the bracket; and a locking part that curvedly surrounds the protrusion piece together with the bracket on the bracket and is screw-coupled with the bracket.

21. The excavating apparatus of claim 16, wherein when the rod is minimally exposed from the rod cover, a multi-joint link rotationally coupled to the bucket, the lower arm, and the bucket cylinder is provided,
wherein the multi-joint link is axially coupled to the lower arm right next to the central axis of the upper arm, is further away from the bucket than the lower arm from the central axis of the upper arm to be axially coupled to the bucket, and is further away from the bucket cylinder than the bucket from the central axis of the upper arm to be axially coupled to the rod of the bucket cylinder.

22. The excavating apparatus of claim 16, wherein when the rod is maximally exposed from the rod cover, a multi-joint link rotationally coupled to the bucket, the lower arm, and the bucket cylinder is provided,
wherein the multi-joint link is located across left and right sides of the central axis of the upper arm right next to the central axis of the upper arm to be axially coupled to the lower arm and the rod, and is further away from the bucket than the lower arm from the central axis of the upper arm to be axially coupled to the bucket.

23. The excavating apparatus of claim 14, wherein the rotational arm stand has a lower rotary table and an upper rotary table, which are sequentially stacked between the lower arm and the upper arm, respectively fixes the lower rotary table and the upper rotary table to the lower arm and the upper arm, rotates the lower rotary table relative to the upper rotary table, and has a center joint that passes through the lower rotary table and the upper rotary table together with the lower arm,
wherein the center joint is located on the central axis of the upper arm.

24. The excavating apparatus of claim 14, wherein when the upper arm has a slip entry/exit hole part, the boom coupling hole part, and the arm cylinder coupling hole part on lower, middle, and upper sides of the upper arm, and when the lower arm and the rotational arm stand have the center joint on the central axis of the upper arm, the slip entry/exit hole part of the upper arm exposes the center joint to an outside on the central axis of the upper arm to induce a coupling of a slip to the center joint or separation of the slip from the center joint.

25. The excavating apparatus of claim 14, wherein when the upper arm has a slip entry/exit hole part, the boom coupling hole part, and the arm cylinder coupling hole part on lower, middle, and upper sides of the upper arm, the slip entry/exit hole part of the upper arm is located on the central axis of the upper arm and is located at a level same as that of the boom coupling hole part in a direction perpendicular to the central axis of the upper arm.

26. The excavating apparatus of claim 14, wherein when the upper arm has a slip entry/exit hole part, the boom coupling hole part, and the arm cylinder coupling hole part on lower, middle, and upper sides of the upper arm, the slip entry/exit hole part and the arm cylinder coupling hole part of the upper arm are located on the central axis of the upper arm.

27. The excavating apparatus of claim 14, wherein when a rotary link coupled to the bucket and the lower arm, the bucket cylinder located on a first side of the lower arm and coupled to the lower arm, a clamp cylinder located on a second side of the lower arm and coupled to the lower arm, a clamp located at an end of the lower arm and coupled to the lower arm, and a multi-joint link coupled to the lower arm, the rotary link, and the bucket cylinder are provided, the bucket and the rotary link rotate around the central axis of the upper arm due to retraction or extension of the multi-joint link according to an operation of the bucket cylinder, whereas the clamp is axially coupled to the lower arm near the central axis of the upper arm, and moves relative to the lower arm to rotate up and down according to an operation of the clamp cylinder.
